# FASCICULE DE BREVET EUROPEEN

(11) **EP 1 232 332 B1**
(45) Date de publication et mention de la délivrance du brevet: **16.02.2005**
(21) Numéro de dépôt: 00981446.8
(22) Date de dépôt: 20.11.2000
(51) Int. Cl.: F01N 3/02

(54) **DISPOSITIF DE REFROIDISSEMENT SELECTIF DE GAZ D'ECHAPPEMENT DU MOTEUR D'UN VEHICULE AUTOMOBILE**
VORRICHTUNG ZUR SELEKTIVEN KÜHLUNG VON ABGAS EINES KRAFTFAHRZEUGMOTORS
DEVICE FOR SELECTIVELY COOLING A MOTOR VEHICLE ENGINE EXHAUST GASES

(30) Priorité: 22.11.1999 FR 9914660
(43) Date de publication de la demande: 21.08.2002
(73) Titulaire: Peugeot Citroen Automobiles SA, 92200 Neuilly sur Seine (FR)
(72) Inventeur: CLAVERIE, Patrick, F-92140 Clamart (FR); VITEL, Arnaud, F-92250 La Garenne-Colombes (FR)
(74) Mandataire: Bouget, Lucien
(86) Numéro de dépôt international: PCT/FR2000/003221
(87) Numéro de publication internationale: WO 2001/038701

(56) Documents cités:
- EP-A- 0 886 039
- DE-A- 3 039 742
- DE-U- 29 708 011

## Description

L'invention concerne un dispositif de refroidissement sélectif de gaz d'échappement du moteur d'un véhicule automobile, intercalé sur le trajet des gaz d'échappement dans une ligne d'échappement du véhicule.

Les lignes d'échappement des véhicules automobiles peuvent comporter des dispositifs de traitement des gaz tels que des systèmes de dépollution dans lesquels on élimine certains polluants tels que les oxydes d'azote (NOx) contenus dans les gaz d'échappement provenant du moteur du véhicule.

Le traitement des gaz d'échappement pour éliminer les polluants consiste à faire passer les gaz d'échappement, dans un dispositif de traitement, au contact d'un élément actif composé d'un mélange de différents métaux choisis pour leur aptitude à catalyser des réactions de transformation des polluants ou à adsorber les polluants. L'élément actif est déposé sous la forme d'une couche d'imprégnation sur un support céramique poreux fixé à l'intérieur d'une enveloppe en tôle métallique du dispositif de dépollution. Le support céramique poreux est lui-même recouvert d'une couche à base d'alumine poreuse appelée "wash-coat" destinée à augmenter considérablement la surface de contact entre les gaz et les éléments actifs qui sont déposés sur le wash-coat. L'élément actif du système de dépollution et le wash-coat ne peuvent résister au-delà d'une certaine température des gaz d'échappement et subissent, lorsqu'ils sont en contact avec des gaz d'échappement à une température excessive, des détériorations irréversibles, de sorte qu'ils ne sont plus en mesure d'assurer leur fonction de dépollution.

Par exemple, dans le cas des systèmes de dépollution destinés à éliminer les oxydes d'azote dans les gaz d'échappement des moteurs à essence à injection directe, ces systèmes de dépollution étant généralement appelés "pièges à NOx", la température limite que peuvent supporter les éléments du piège à NOx en contact avec les gaz d'échappement est de l'ordre de 850°C à l'heure actuelle.

Les gaz à la sortie d'un moteur à essence à injection directe atteignent une température de 950 à 1000°C, dans les phases de pleine charge du moteur.

Dans ce cas, pour maintenir la température des gaz à une température au plus égale à 850°C, pour un moteur à essence à injection directe de deux litres de cylindrée, il faut évacuer une puissance de l'ordre de 15 kW. Il est donc nécessaire de concevoir une ligne d'échappement comportant un dispositif de refroidissement qui permette d'évacuer cette énergie avant que les gaz d'échappement ne pénètrent dans le piège à NOx.

En outre, toujours dans le cas d'un piège à NOx, l'efficacité maximale quant à l'élimination des polluants est obtenue dans une plage de températures comprise entre 300 et 500° environ, du fait des réactions chimiques mises en oeuvre. Il est donc nécessaire de maintenir les gaz arrivant dans le piège à NOx le plus possible dans cette plage de températures.

Cette exigence doit être respectée en particulier dans les conditions de fonctionnement du cycle réglementaire de dépollution. Sur le cycle réglementaire de dépollution, les gaz évoluent, de manière classique, dans une plage de températures allant de 350°C à 700°C environ.

Pour rester dans la plage d'efficacité du piège à NOx, dans le cas du cycle réglementaire de dépollution, pour un moteur tel que défini plus haut, on ne doit évacuer que des puissances thermiques de l'ordre de 2 kW.

En conséquence, dans le cas du fonctionnement à pleine charge du moteur, il est nécessaire d'évacuer au moins 15 kW de puissance thermique alors que, dans les conditions de fonctionnement du cycle réglementaire de dépollution, on ne doit pas évacuer plus de 2 kW.

De manière générale, dans le cas de nombreux systèmes de dépollution, il est nécessaire, pour des considérations de tenue à la température des éléments du système de dépollution, d'éviter que celui-ci ne reçoive des gaz d'échappement à trop haute température.

Il est également nécessaire, pour dépolluer efficacement les gaz d'échappement, que les gaz d'échappement qui traversent le système de dépollution aient une température située dans un intervalle bien déterminé.

Ces deux conditions, qui définissent la position des éléments de dépollution sur la ligne d'échappement, sont souvent incompatibles.

Il est alors nécessaire, pour remplir les deux conditions relatives à la température des gaz d'échappement dans le système de dépollution, ces conditions pouvant être incompatibles, de prévoir un dispositif de refroidissement des gaz d'échappement qui puisse fonctionner de manière sélective dans une première et dans une seconde conditions de refroidissement.

On a proposé, pour résoudre ce problème, par exemple dans le EP-0.848.142, un dispositif de refroidissement qui comporte un premier et un second tubes de passage des gaz d'échappement dont la paroi externe est en contact avec de l'air de refroidissement, par exemple l'air atmosphérique, pendant le fonctionnement du moteur du véhicule. L'un des tubes de grande longueur permet d'évacuer un maximum d'énergie alors que le second tube de longueur très réduite ne permet d'évacuer qu'une quantité très faible d'énergie thermique. Une vanne pilotée permet de faire passer les gaz d'échappement soit dans les deux tubes soit dans le tube de longueur réduite seulement, en fonction de conditions de fonctionnement du moteur ou de la ligne d'échappement. En réalisant une adaptation des longueurs des deux tubes suivant les conditions de fonctionnement recherchées, on parvient à régler la température des gaz d'échappement avant leur entrée dans le système de dépollution, dans toutes les conditions de fonctionnement du moteur.

Toutefois, cette solution peut nécessiter l'utilisation de tubes de très grande longueur qui ne peuvent pas être facilement logés dans le véhicule, que ce soit dans le bloc moteur ou dans le sous-plancher.

Le but de l'invention est donc de proposer un dispositif de refroidissement de gaz d'échappement du moteur d'un véhicule automobile, intercalé sur le trajet des gaz d'échappement, dans une ligne d'échappement du véhicule, comportant une première voie de circulation des gaz dans au moins un premier conduit en contact par sa paroi externe avec de l'air de refroidissement et une seconde voie de circulation des gaz d'une longueur supérieure à la longueur de la première voie de circulation, constituée d'au moins un second conduit ayant une paroi externe en contact avec de l'air de refroidissement et des moyens d'aiguillage des gaz d'échappement totalement vers la première ou au moins principalement vers la seconde voie de circulation, commandés en fonction d'un paramètre thermique de fonctionnement de la ligne d'échappement ou du moteur, ce dispositif de refroidissement pouvant être facilement implanté dans la ligne d'échappement du moteur, par exemple dans un sous-plancher du véhicule automobile.

Dans ce but, le dispositif de refroidissement selon l'invention comporte une enveloppe externe de forme sensiblement cylindrique ayant une paroi latérale traversée par des ouvertures, le premier conduit constitué par un tube s'étendant dans une direction axiale de l'enveloppe cylindrique et la seconde voie de circulation constituée par une pluralité de tubes fixés par des moyens de maintien dans des dispositions sensiblement parallèles, dans une direction axiale à l'intérieur de l'enveloppe cylindrique, une conduite d'arrivée de gaz d'échappement dans l'enveloppe cylindrique reliée à une partie amont de la ligne d'échappement, une conduite d'évacuation de gaz d'échappement reliée à une partie aval de la ligne d'échappement et des collecteurs des gaz d'échappement disposés à l'intérieur de l'enveloppe cylindrique et séparés par les moyens de maintien pour faire passer les gaz d'échappement de la conduite d'arrivée à la conduite d'évacuation par la première et la seconde voies de circulation, les moyens d'aiguillage étant constitués par au moins une vanne commandée pour l'ouverture et la fermeture de l'extrémité d'entrée de l'un au moins de la pluralité des tubes.

Afin de bien faire comprendre l'invention, on va décrire à titre d'exemple, en se référant aux figures jointes en annexe, un mode de réalisation d'un dispositif de refroidissement suivant l'invention.

La figure 1 est une vue schématique en perspective d'une partie d'une ligne d'échappement d'un véhicule automobile comportant un dispositif de refroidissement sélectif suivant l'invention.

Les figures 2A et 2B sont des vues en perspective du dispositif de refroidissement suivant l'invention, dans une phase de fonctionnement à forte perte énergétique et dans une phase de fonctionnement à faible perte énergétique, respectivement.

La figure 3 est une vue en coupe axiale schématique du dispositif de refroidissement suivant l'invention.

Les figures 4A, 4B, 4C, 4D, 4E et 4F sont des vues en coupes respectivement suivant 4A, 4B, 4C, 4D, 4E et 4F de la figure 3.

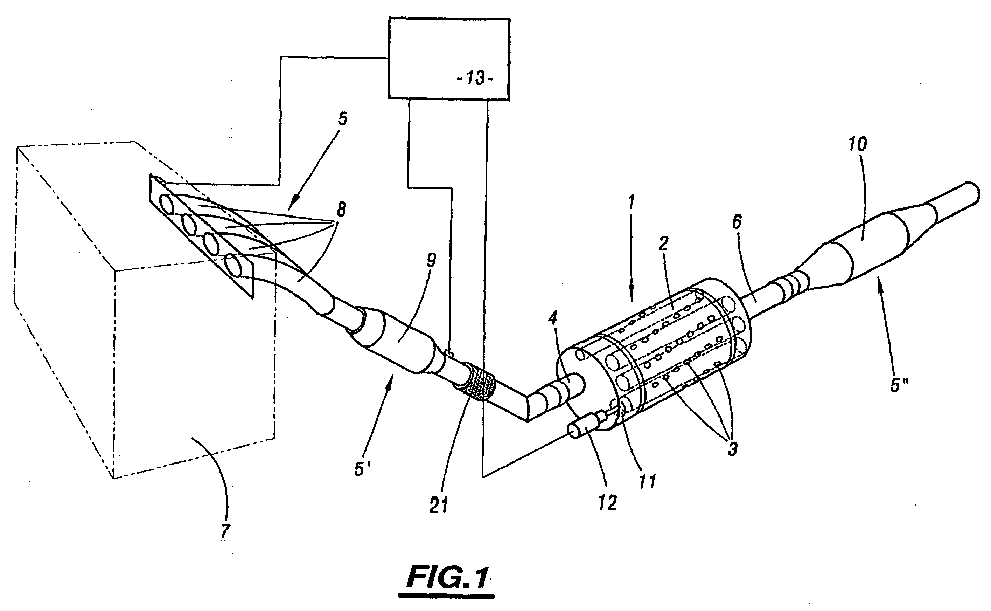

Sur la figure 1, on a représenté une partie d'une ligne d'échappement d'un véhicule automobile sur laquelle est intercalé un dispositif de refroidissement suivant l'invention désigné de manière générale par le repère 1.

La ligne d'échappement désignée de manière générale par le repère 5 comporte une partie amont 5' reliée aux tubulures 8 de sortie des gaz d'échappement d'un moteur 7 (représenté de manière conventionnelle sous la forme d'un parallélépipède en traits mixtes). La partie amont 5' de la ligne d'échappement comporte en particulier une première unité de dépollution 9 qui est constituée par un catalyseur ayant une fonction trois voies, c'est-à-dire permettant d'éliminer dans les gaz d'échappement le monoxyde de carbone CO, des hydrocarbures imbrûlés et des oxydes d'azote, le catalyseur étant disposé à l'intérieur d'une enveloppe métallique raccordée à des conduites du premier tronçon 5' de la ligne d'échappement. La partie amont de la ligne d'échappement comporte également un élément de découplage 21 qui permet d'éviter la transmission de vibrations du moteur 7 à la partie de la ligne d'échappement située en aval du découpleur 21.

La ligne d'échappement comporte une partie aval 5" sur laquelle est intercalé un dispositif de dépollution 10 réalisé sous la forme d'un piège à NOx, c'est-à-dire un dispositif de dépollution permettant d'éliminer les oxydes d'azote dans les gaz d'échappement.

Le dispositif de refroidissement sélectif 1 suivant l'invention comporte une enveloppe externe 2 en tôle métallique de forme cylindrique dont la paroi latérale est traversée par des ouvertures 3, au moins dans sa partie centrale.

L'enveloppe 2 est fermée à ses extrémités axiales et reliée, par l'intermédiaire d'une conduite 4 d'arrivée de gaz d'échappement, à la partie amont 5' de la ligne d'échappement et, par une conduite 6 d'évacuation de gaz d'échappement refroidis, à la partie aval 5" de la ligne d'échappement comportant le piège à NOx 10.

Le dispositif de refroidissement sélectif 1 suivant l'invention est donc intercalé entre la partie amont 5' et la partie aval 5" de la ligne d'échappement et disposé immédiatement en amont du piège à NOx 10.

Comme il sera expliqué plus loin le dispositif de refroidissement 1 comporte, à l'intérieur de l'enveloppe en tôle métallique 2, deux voies de circulation des gaz d'échappement entrant dans la partie amont de l'enveloppe cylindrique 2 par la conduite d'arrivée 4 et sortant par la partie aval de l'enveloppe cylindrique par la conduite d'évacuation 6. L'aiguillage des gaz d'échappement vers l'une ou l'autre des voies de circulation à l'intérieur de l'enveloppe cylindrique 2 du dispositif de refroidissement est assuré par un dispositif d'aiguillage comportant une vanne 11 pour l'ouverture ou la fermeture de l'extrémité de l'une des voies de circulation des gaz d'échappement, un dispositif 12 d'actionnement de la vanne qui peut être un moteur électrique ou un dispositif hydraulique ou pneumatique à dépression et une unité 13 de commande du dispositif d'actionnement 12 qui reçoit un signal de mesure d'un capteur de mesure de température disposé à la sortie de la première unité de dépollution 9 ou au niveau de la partie d'échappement du moteur 7.

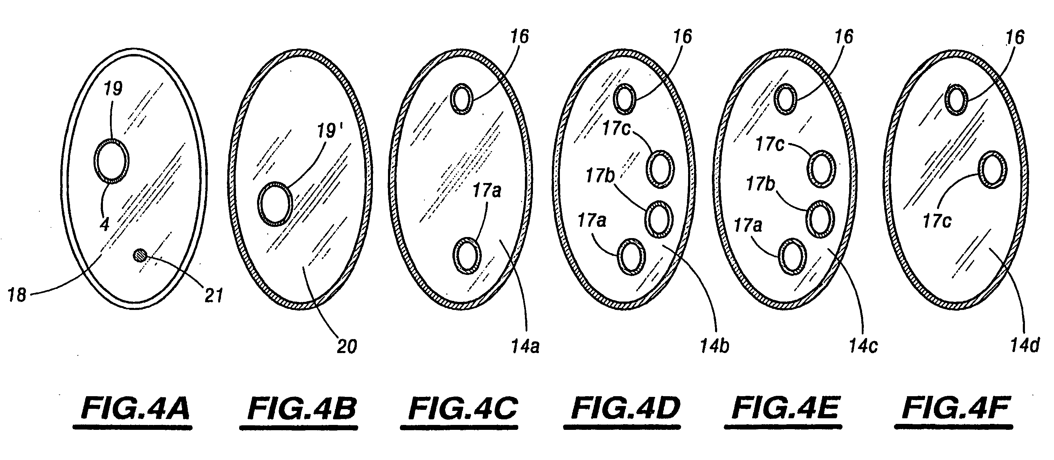

Comme il est visible en particulier sur les figures 4A à 4F, l'enveloppe métallique 2 de forme cylindrique présente une section transversale perpendiculaire à l'axe du cylindre d'une forme oblongue, par exemple une forme elliptique. Dans certains cas, l'enveloppe du dispositif peut présenter une forme plus complexe pour permettre de loger le dispositif sous le plancher du véhicule automobile.

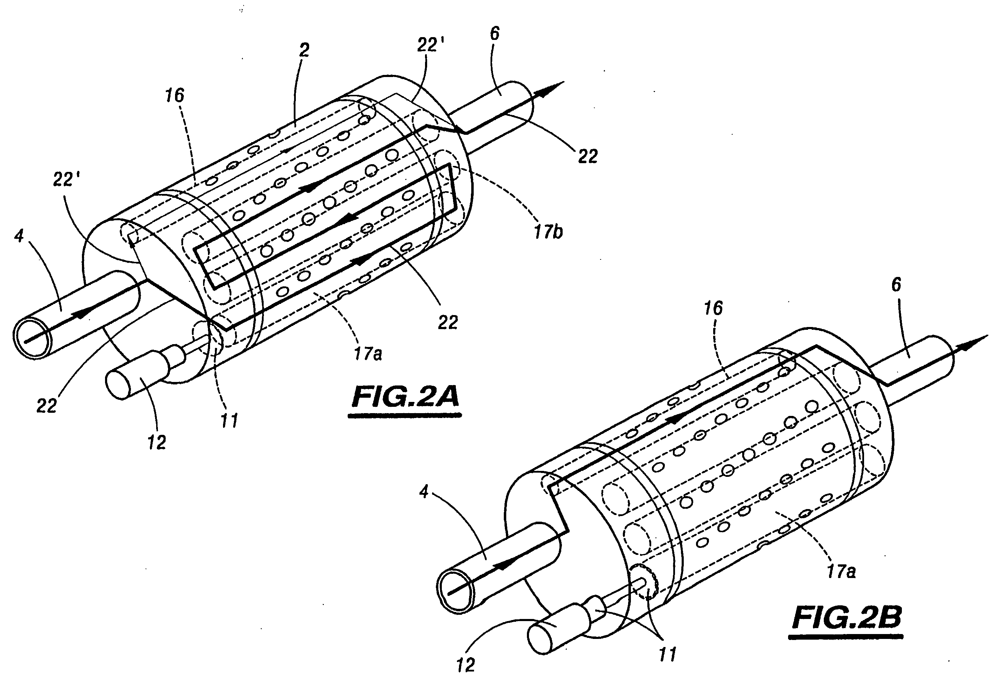

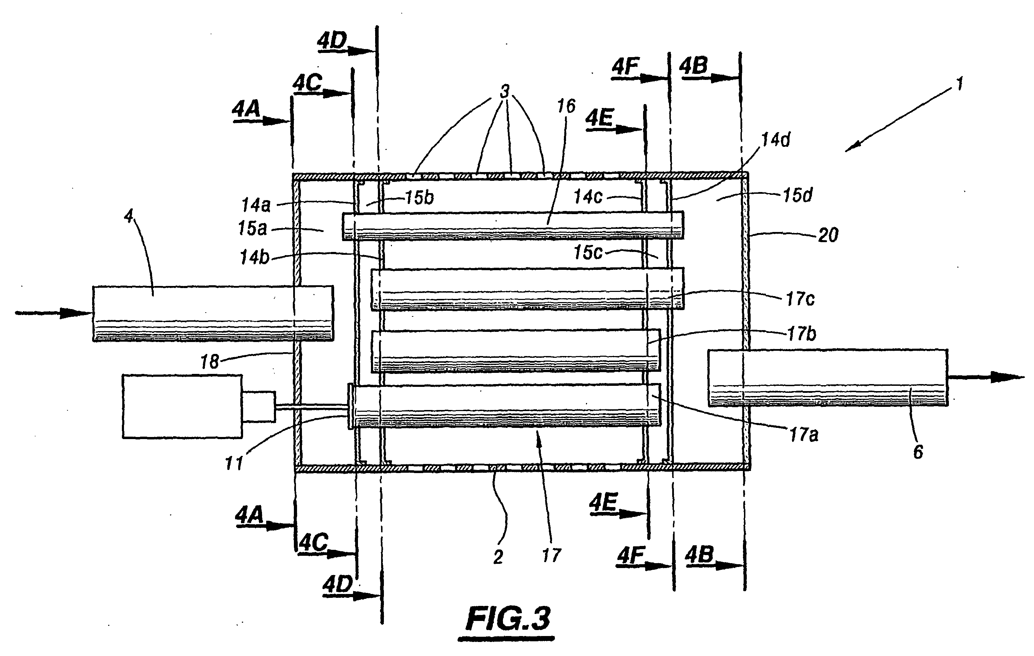

Comme il est visible en particulier sur les figures 2A, 2B et 3, à l'intérieur de l'enveloppe 2, une première voie de circulation des gaz est constituée par un simple tube rectiligne 16 disposé dans l'enveloppe dans une disposition sensiblement parallèle à l'axe de l'enveloppe cylindrique et la seconde voie de circulation par trois tubes rectilignes 17a, 17b, 17c fixés à l'intérieur de l'enveloppe 2 dans des dispositions sensiblement parallèles à l'axe de l'enveloppe cylindrique 2.

Les gaz d'échappement circulent successivement dans la direction axiale à l'intérieur des tubes 17a, 17b et 17c, lorsque la seconde voie de circulation des gaz dans le dispositif de refroidissement 1 est activée par ouverture de la vanne 11.

Les tubes 16, 17a, 17b et 17c sont maintenus à l'intérieur de l'enveloppe 2 du dispositif de refroidissement 1 par des coupelles 14a, 14b, 14c et 14d. Comme il est visible sur les figures 4C à 4F, les coupelles14a, 14b, 14c et 14d présentent la forme oblongue, par exemple elliptique, de la section transversale intérieure de l'enveloppe métallique 2 du dispositif de refroidissement. Dans certains cas, suivant la place disponible sous le plancher du véhicule, on peut prévoir des formes plus complexes de la section transversale de l'enveloppe et des coupelles. Chacune des coupelles, qui est réalisée en tôle métallique comporte un bord rabattu à 90° par rapport au plan de la coupelle, par l'intermédiaire duquel la coupelle est fixée à l'intérieur de l'enveloppe métallique 2 du dispositif de refroidissement 1, par sertissage et par soudage. Les coupelles 14a, 14b, 14c et 14d seront désignées comme coupelles intérieures.

De plus, l'extrémité axiale amont de l'enveloppe métallique 2 est fermée par une coupelle extérieure amont 18 et l'extrémité axiale aval de l'enveloppe 2 est fermée par une coupelle extérieure aval 20. Les coupelles extérieures 18 et 20, qui présentent une forme analogue aux coupelles intérieures et qui ont été représentées sur les figures 4A et 4B, respectivement, sont fixées par sertissage, suivant leur bord externe, sur le bord d'extrémité, respectivement amont et aval, de l'enveloppe métallique 2.

La première coupelle intérieure 14a et la seconde coupelle intérieure 14b sont fixées à l'intérieur de l'enveloppe métallique 2, dans une zone amont de l'enveloppe métallique, c'est-à-dire proche de son extrémité amont fermée par la coupelle extérieure amont 18.

La troisième coupelle intérieure 14c et la quatrième coupelle intérieure 14d sont fixées à l'intérieur de l'enveloppe métallique 2 du dispositif de refroidissement, dans une zone d'extrémité aval, c'est-à-dire proche de l'extrémité aval de l'enveloppe métallique fermée par la coupelle extérieure aval 20.

Les coupelles extérieures et les coupelles intérieures sont fixées sur l'enveloppe 2, dans des dispositions transversales, c'est-à-dire perpendiculaires à l'axe de l'enveloppe cylindrique 2, toutes les coupelles étant ainsi parallèles entre elles.

Les coupelles extérieures 18 et 20 et les coupelles intérieures 14a, 14b, 14c, 14d délimitent entre elles des collecteurs 15a, 15b, 15c et 15d de distribution des gaz d'échappement.

Le premier collecteur 15a est délimité entre la coupelle extérieure amont 18 et la première coupelle intérieure 14a.

Le second collecteur 15b est délimité entre la première coupelle intérieure 14a et la seconde coupelle intérieure 14b.

Le troisième collecteur 15c est délimité entre la troisième coupelle intérieure 15c et la quatrième coupelle intérieure 14d.

Enfin, le quatrième collecteur 15d est délimité entre la quatrième coupelle intérieure 14d et la coupelle extérieure aval 20 du dispositif de refroidissement.

Comme il est visible sur la figure 4A, la coupelle extérieure amont 18 est traversée par une ouverture 19 qui peut être circulaire ou éventuellement oblongue, par exemple elliptique, dans laquelle est engagée et fixée par sertissage une extrémité de la conduite 4 d'arrivée de gaz d'échappement débouchant dans le premier collecteur 15a. De plus, la coupelle extérieure amont 18 est traversée par une ouverture 21 de passage de la tige de la soupape 11 de la vanne commandée.

La seconde coupelle extérieure, ou coupelle aval 20, est traversée par une ouverture 19', d'engagement et de fixation par sertissage d'une extrémité de la conduite d'évacuation 6 des gaz d'échappement débouchant dans le quatrième collecteur 15d.

Aussi bien le tube 4 d'arrivée des gaz d'échappement que le tube 6 d'évacuation des gaz d'échappement présentent une section transversale qui peut être circulaire ou éventuellement oblongue, par exemple elliptique, qui s'ajuste parfaitement dans l'ouverture 19 ou 19'.

De manière générale, le tube 16 et les tubes 17a, 17b et 17c constituant les voies de circulation des gaz d'échappement à l'intérieur de l'enveloppe 2 du dispositif de refroidissement présentent également des formes circulaires ou éventuellement oblongues, par exemple elliptique et sont sertis dans les ouvertures des coupelles.

Pour assurer la fixation des parties d'extrémité des tubes constituant les voies de circulation des gaz d'échappement du dispositif de refroidissement, les coupelles intérieures 14a, 14b, 14c et 14d sont traversées par des ouvertures d'engagement des tubes par leur partie d'extrémité.

Comme il est visible sur les figures 4C à 4F, les quatre coupelles intérieures 14a, 14b, 14c et 14d comportent chacune une ouverture d'engagement et de fixation du tube 16 constituant le conduit unique de passage des gaz de la première voie de circulation.

La première, la seconde et la troisième coupelles intérieures 14a, 14b et 14c comportent chacune une ouverture de passage et de fixation du premier tube 17a de la seconde voie de circulation 17.

La deuxième coupelle 14b et la troisième coupelle 14c comportent chacune une ouverture de passage et de fixation du second tube 17b de la seconde voie de circulation 17.

Les seconde, troisième et quatrième coupelles intérieures 14b, 14c et 14d sont traversées chacune par une ouverture de passage et de fixation d'une partie d'extrémité du troisième tube 17c de la seconde voie de circulation 17 des gaz d'échappement.

Les ouvertures 3 traversant la paroi latérale de l'enveloppe en tôle métallique 2 du dispositif de refroidissement sont toutes situées dans une zone centrale de la paroi latérale, entre les coupelles 14b et 14c, c'est-à-dire entre le second collecteur 15b et le troisième collecteur 15c, la longueur dans la direction axiale de la zone centrale n'étant qu'un peu inférieure à la longueur totale de l'enveloppe métallique 2, du fait que les collecteurs 15a, 15b, 15c et 15d présentent une faible longueur axiale.

Les parties d'extrémité amont et aval de la paroi latérale de l'enveloppe métallique 2 sur lesquelles sont rapportées et fixées les coupelles extérieures et dans lesquelles sont fixées les coupelles intérieures ne comportent aucune ouverture. En outre, le sertissage ou le soudage des coupelles et la fixation par sertissage des tubes des voies de circulation permettent d'assurer une fermeture totalement étanche des collecteurs 15a, 15b, 15c et 15d qui ne communiquent que par l'intermédiaire des tubes des voies de circulation.

Comme il est visible sur la figure 3 et les figures 4C à 4F, le tube 16 constituant le conduit unique de la première voie de circulation présente une section sensiblement plus petite que la section des tubes 17a, 17b, 17c de la seconde voie de circulation 17 des gaz d'échappement.

Le tube 16 de la première voie de circulation débouche à l'une de ses extrémités dans le premier collecteur 15a et sa seconde extrémité dans le quatrième collecteur 15d.

Le premier tube 17a de la seconde voie de circulation des gaz d'échappement débouche, à l'une de ses extrémités, dans le premier collecteur 15a et, à sa seconde extrémité, dans le troisième collecteur 15c.

Le second tube 17b de la seconde voie de circulation débouche, à l'une de ses extrémités, dans le second collecteur 15b et, à sa seconde extrémité, dans le troisième collecteur 15c.

Le troisième tube 17c de la seconde voie de circulation débouche, à l'une de ses extrémités dans le second collecteur 15b et, à sa seconde extrémité dans le quatrième collecteur 15d.

Pendant le fonctionnement de la ligne d'échappement 5, on mesure la température des gaz d'échappement, de préférence à la sortie de la première unité de dépollution 9 ou dans le collecteur de distribution du moteur 7. La température mesurée est comparée par l'unité de traitement électronique 13 à une valeur de consigne.

Dans le cas où la température mesurée est supérieure à la valeur de consigne, par exemple dans le cas d'un fonctionnement du moteur à haut régime avec une sortie des gaz d'échappement à très haute température, le dispositif d'actionnement 12 de la vanne 11 est commandé par l'unité de traitement 13, dans le sens de l'ouverture de la vanne, c'est-à-dire, comme représenté sur la figure 2A, de telle manière que le clapet de la vanne solidaire de la tige traversant la coupelle 18 soit éloigné de l'extrémité d'entrée du premier tube 17a de la seconde voie de circulation des gaz.

Les gaz d'échappement dont la circulation est figurée par les flèches 22 sont introduits dans le premier collecteur 15a par la conduite 4 d'arrivée des gaz d'échappement.

Du fait de la différence de section des tubes 17a et 16, le flux principal de gaz d'échappement 22 pénètre et circule axialement dans le premier tube 17a de la seconde voie de circulation. Seul un flux très faible pratiquement négligeable 22' de gaz d'échappement pénètre dans le tube 16 de la première voie de circulation, pour circuler axialement dans le tube 16 dont la sortie débouche dans le quatrième collecteur 15d.

Le flux principal 22 de gaz d'échappement circule dans la direction axiale du tube 17a dont la sortie débouche dans le troisième collecteur 15c. Le troisième collecteur 15c assure le passage des gaz d'échappement provenant du premier tube 17a dans le second tube 17b, les gaz d'échappement circulant alors dans le second tube 17b, dans la direction axiale du tube, dans le sens inverse du sens de circulation dans le tube 17a, c'est-à-dire de l'aval vers l'amont du dispositif de refroidissement. Les gaz d'échappement sortent du second tube 17b par son extrémité amont, dans le second collecteur 15b qui assure la distribution des gaz d'échappement provenant du second tube 17b dans le troisième tube 17c de la seconde voie de circulation 17. Les gaz circulent dans le troisième tube 17c dans la direction axiale et dans le sens allant de l'amont vers l'aval, pour s'écouler à l'extrémité aval du troisième tube 17c dans le quatrième collecteur 15d. Les gaz d'échappement du flux principal 22 et du flux secondaire 22' sont évacués par la conduite d'évacuation 6 en direction de la partie aval de la ligne d'échappement et du piège à NOx 10.

Les gaz d'échappement qui ont circulé principalement dans la première voie de circulation, à l'intérieur des tubes 17a, 17b, 17c dont la paroi externe est refroidie par de l'air traversant les ouvertures 3 et circulant par convection au contact des tubes dans l'enveloppe métallique 2 subissent un refroidissement intense, du fait que le trajet des gaz dans la seconde voie de circulation présente une longueur importante. Cette longueur est peu inférieure à trois fois la longueur de l'enveloppe en tôle métallique 2 du dispositif de refroidissement, de sorte que la puissance thermique évacuée par l'air de refroidissement circulant au contact des tubes peut être élevée, par exemple de l'ordre de 15 kW, dans le cas d'un moteur dont les caractéristiques ont été données plus haut.

Dans le cas où la température mesurée par le capteur de température des gaz d'échappement du moteur est inférieure à la valeur de consigne, l'unité de traitement 13 transmet au dispositif d'actionnement 12 de la vanne 11 un ordre de fermeture, de sorte que le dispositif d'actionnement 12 assure un positionnement de la soupape de la vanne 11 en position d'obturation de l'extrémité d'entrée du premier conduit 17a de la seconde voie de circulation, comme il est visible sur la figure 2B. Dans ce cas, les gaz d'échappement pénétrant dans le premier collecteur de distribution 15a ne peuvent s'écouler que dans le tube 16 constituant le conduit unique de la seconde voie de circulation. Les gaz d'échappement circulent à l'intérieur du tube 16, dans sa direction axiale, pour déboucher, à l'extrémité aval de sortie du tube 16, dans le quatrième collecteur de distribution 15d. Les gaz d'échappement sont alors évacués par la conduite d'évacuation 6 vers la partie aval 5" de la ligne d'échappement comportant le piège à NOx 10. Pendant leur trajet de faible longueur à l'intérieur du tube 16, la longueur du tube 16 étant un peu inférieure à la longueur de l'enveloppe 2, les gaz d'échappement ne sont que faiblement refroidis par l'air de refroidissement circulant au contact de la surface externe du tube 16.

Pour réduire encore l'effet de refroidissement du tube 16, il est possible de déposer sur sa surface externe une couche d'isolation thermique.

Le dispositif de refroidissement suivant l'invention peut donc être actionné de manière automatique pour assurer soit un refroidissement intense des gaz d'échappement avec une évacuation d'une puissance thermique importante soit un faible refroidissement, avec une évacuation d'une puissance thermique faible.

Le dispositif de refroidissement suivant l'invention permet donc de faire fonctionner le piège à NOx dans de très bonnes conditions, quel que soit le régime de fonctionnement du moteur.

Les avantages obtenus en utilisant le dispositif de refroidissement sélectif suivant l'invention sont les suivants :
- en ce qui concerne le traitement des gaz dans la ligne d'échappement, le dispositif suivant l'invention permet de rester dans la plage d'efficacité du système de dépollution en amont duquel est placé le dispositif de refroidissement et de protéger les composants du système de dépollution contre des dégradations d'origine thermique ;
- en ce qui concerne l'implantation du dispositif, ce dispositif est compact et peut être facilement implanté dans un sous-plancher du véhicule automobile ;
- en ce qui concerne la facilité et la fiabilité de la réalisation du dispositif, on utilise des technologies habituelles dans le cas de la fabrication en série d'un composant pour ligne d'échappement. En particulier l'utilisation de tubes et de coupelles et leur assemblage par un procédé tel que le sertissage sont des techniques parfaitement maîtrisées et éprouvées pour obtenir des composants d'une ligne d'échappement présentant une bonne résistance mécanique et surtout une bonne résistance à la corrosion interne et externe.

Les différents éléments du dispositif de refroidissement suivant l'invention, à savoir les tubes, les coupelles et l'enveloppe en tôle métallique peuvent être réalisés en tout matériau pouvant être facilement formé et assemblé et présentant une bonne tenue à la corrosion à haute température par les gaz d'échappement et l'air de refroidissement. De tels matériaux peuvent être par exemple de l'acier aluminié, de l'acier inoxydable ou un alliage de nickel renfermant du chrome.

L'invention ne se limite pas strictement au mode de réalisation qui a été décrit.

C'est ainsi que la seconde voie de circulation des gaz d'échappement à l'intérieur du dispositif de refroidissement peut être réalisée à partir d'un nombre de tubes quelconque disposés en parallèle à l'intérieur de l'enveloppe cylindrique en tôle métallique. La seule limitation au nombre de tubes permettant d'augmenter la longueur du parcours des gaz d'échappement est imposée par le nombre de tubes maximal qu'on peut fixer à l'intérieur de l'enveloppe dont la section est limitée pour pouvoir loger le dispositif de refroidissement sous le plancher du véhicule automobile. Les tubes constituant le parcours des gaz d'échappement doivent présenter une section minimale et être espacés les uns des autres dans la section de l'enveloppe métallique de manière à permettre la circulation de l'air pénétrant dans l'enveloppe en tôle métallique par les ouvertures de sa paroi latérale et circulant par convection à l'intérieur de l'enveloppe métallique au contact des tubes. On peut augmenter la capacité de refroidissement du dispositif en augmentant le nombre et le diamètre des trous traversant l'enveloppe, ce qui a pour effet d'intensifier la circulation par convection de l'air autour des tubes.

De préférence, dans le cas d'un dispositif de refroidissement comportant une seconde voie de circulation des gaz constituée par n tubes, on choisira n impair, de manière à assurer l'entrée et la sortie des gaz, respectivement par le côté amont et par le côté aval du dispositif de refroidissement, sans élément de renvoi supplémentaire des gaz. Dans ce cas, la distribution des gaz à l'intérieur de l'enveloppe métallique du dispositif de refroidissement peut être assurée en réalisant n + 1 collecteurs à l'intérieur de l'enveloppe métallique, les collecteurs étant délimités par deux coupelles extérieures d'extrémité de l'enveloppe métallique et par n + 1 coupelles intérieures.

Généralement, la première voie de circulation est constituée d'un seul conduit constitué par un tube rectiligne qui peut être recouvert d'une couche externe d'isolation thermique.

On peut utiliser, pour faire passer les gaz d'échappement d'un tube au suivant, dans le sens du parcours des gaz, des collecteurs ayant des formes différentes de celles qui ont été décrites, ces collecteurs étant délimités par des parois différentes de coupelles. Comme indiqué plus haut, l'utilisation de coupelles permet de rester dans le cadre d'une fabrication classique d'un élément d'une ligne d'échappement de véhicule automobile. On peut également prévoir des coupelles complémentaires, par exemple pour améliorer la tenue mécanique du dispositif ; en particulier des coupelles complémentaires peuvent être utilisées pour assurer un meilleur maintien des conduits d'entrée et de sortie. Il peut être utile également d'adjoindre un ou plusieurs soufflets à un ou plusieurs tubes, pour compenser la dilatation thermique différentielle des tubes, ce qui améliore la tenue du dispositif. On pourrait utiliser éventuellement des collecteurs ou des déflecteurs courbes joignant les extrémités des tubes à l'intérieur de l'enveloppe ou toute autre forme de collecteur ou de dispositif de déviation des gaz d'échappement.

L'enveloppe externe du dispositif peut être réalisée par emboutissage, notamment en formant par emboutissage deux demi-coquilles qui sont ensuite assemblées.

Le dispositif d'aiguillage des gaz dans une voie de circulation ou dans l'autre, en fonction d'un paramètre thermique tel que la température des gaz d'échappement en amont du dispositif de refroidissement peut présenter une forme différente de celle qui a été décrite. Dans le cas de l'utilisation d'une vanne commandée par un moteur électrique ou un dispositif pneumatique ou hydraulique, le clapet de la vanne peut être prévu pour fermer au moins une partie quelconque d'une voie de circulation. Le dispositif d'aiguillage peut également être constitué par un ou plusieurs registres disposés dans un ou plusieurs collecteurs du dispositif de refroidissement permettant de diriger le gaz d'échappement vers l'une ou l'autre des voies de circulation.

De préférence, le dispositif de refroidissement suivant l'invention est disposé immédiatement en amont d'un dispositif de traitement des gaz d'échappement tel qu'un système de dépollution.

Bien entendu, l'invention ne se limite pas au refroidissement des gaz en amont d'un piège à NOx mais peut être utilisée en amont de tout dispositif de dépollution dont il peut être nécessaire de protéger les composants contre des chocs thermiques ou contre une haute température ou de régler les conditions de fonctionnement, dans une plage de température précise des gaz d'échappement.

L'invention s'applique à tout type de véhicule automobile comportant un dispositif de traitement des gaz d'échappement tel qu'un système de dépollution.

## Revendications

1. Dispositif de refroidissement de gaz d'échappement du moteur (7) d'un véhicule automobile, intercalé sur le trajet des gaz d'échappement dans une ligne d'échappement (5) du véhicule, comportant une première voie de circulation des gaz dans au moins un premier conduit (16) en contact par sa paroi externe avec de l'air de refroidissement et une seconde voie de circulation (17) des gaz d'une longueur supérieure à la longueur de la première voie de circulation, constituée d'au moins un second conduit (17a, 17b, 17c) ayant une paroi externe en contact avec de l'air de refroidissement et des moyens d'aiguillage (11, 12) des gaz d'échappement totalement vers la première ou au moins principalement vers la seconde voie de circulation commandés en fonction d'un paramètre thermique de fonctionnement de la ligne d'échappement (5) du moteur (7), **caractérisé par le fait qu'**il comporte une enveloppe externe (2) de forme sensiblement cylindrique ayant une paroi latérale traversée par des ouvertures (3), le premier conduit (16) constitué par un tube (16) s'étendant dans une direction axiale de l'enveloppe cylindrique et la seconde voie de circulation (17) constituée par une pluralité de tubes (17a, 17b, 17c) fixés par des moyens de maintien (14a, 14, 14c, 14d) dans des dispositions sensiblement parallèles, dans une direction axiale à l'intérieur de l'enveloppe cylindrique (2), une conduite (4) d'arrivée de gaz d'échappement dans l'enveloppe cylindrique (2) reliée à une partie amont (5') de la ligne d'échappement (5), une conduite d'évacuation de gaz d'échappement (6) reliée à une partie aval (5") de la ligne d'échappement (5) et des collecteurs des gaz d'échappement (15a, 15b, 15c, 15d) disposés à l'intérieur de l'enveloppe cylindrique (2) et séparés par les moyens de maintien (14a, 14b, 14c, 14d) pour faire passer les gaz d'échappement de la conduite d'arrivée (4) à la conduite d'évacuation (6) par la première (16) et par la seconde (17) voies de circulation, les moyens d'aiguillage (11, 12) étant constitués par au moins une vanne (11) commandée pour l'ouverture et la fermeture de l'extrémité d'entrée de l'un au moins de la pluralité des tubes (17a, 17b, 17c).

2. Dispositif de refroidissement selon la revendication 1, **caractérisé par le fait que** les collecteurs (15a, 15b, 15c, 15d) des gaz d'échappement sont délimités à l'intérieur de l'enveloppe métallique (2) du dispositif de refroidissement (1), par deux coupelles d'extrémité axiale ou coupelles extérieures (18, 20) disposées transversalement et fermant les extrémités axiales de l'enveloppe métallique (2) du dispositif de refroidissement (1) et par les moyens de maintien sous la forme d'une pluralité de coupelles intérieures (14a, 14b, 14c, 14d) disposées chacune suivant toute la section transversale interne de l'enveloppe métallique (2), dans des zones d'extrémité axiale de l'enveloppe métallique (2) du dispositif de refroidissement (1) et traversées chacune par au moins une ouverture de passage et de fixation d'un tube (16, 17a, 17b, 17c) de la première et de la seconde voies de circulation des gaz, chacun des tubes (16, 17a, 17b, 17c) de la première et de la seconde voies de circulation des gaz d'échappement (16, 17) étant fixé à l'une de ses extrémités dans une première coupelle intérieure et, à sa seconde extrémité, dans une seconde coupelle intérieure, chacun des collecteurs (15a, 15b, 15c,15d) étant délimité à l'intérieur de la paroi latérale de l'enveloppe métallique (2) par une première coupelle qui peut être une coupelle extérieure ou une coupelle intérieure et par une seconde coupelle qui est une coupelle intérieure et les conduites d'arrivée (4) et d'évacuation (6) des gaz d'échappement débouchant à travers une coupelle extérieure respective (18, 20).

3. Dispositif de refroidissement suivant la revendication 2, **caractérisé par le fait que** les tubes (17a, 17b, 17c) de la seconde voie de circulation des gaz d'échappement comportent trois tubes (17a, 17b, 17c) et que le dispositif comporte quatre collecteurs (15a, 15b, 15c, 15d) délimités à l'intérieur de l'enveloppe métallique (2), un premier collecteur (15a) étant délimité entre une coupelle extérieure (18) traversée par la conduite d'arrivée (4) de gaz d'échappement débouchant dans le premier collecteur (15a) et par une première coupelle intérieure (14a), un second collecteur (15b) étant délimité entre une première coupelle intérieure (14a) et une seconde coupelle intérieure (14b) disposée dans une première zone d'extrémité de l'enveloppe métallique (2) du côté de la conduite d'arrivée (4) des gaz d'échappement, un troisième collecteur (15c) délimité entre une troisième coupelle intérieure (14c) et une quatrième coupelle intérieure (14d), dans une seconde zone d'extrémité de l'enveloppe métallique (2) du côté de la conduite d'évacuation (6) des gaz d'échappement et un quatrième collecteur (15d) délimité par la quatrième coupelle intérieure (14d) et la seconde coupelle extérieure (30) traversée par la conduite d'évacuation de gaz d'échappement (6), un premier tube (17a) de la seconde voie de circulation traversant, à l'une de ses extrémités, la première coupelle (14a) et la seconde coupelle (14b) et, à son autre extrémité, la troisième coupelle intérieure (14c), de manière à déboucher, à l'une de ses extrémités, dans le premier collecteur (15a) et, à sa seconde extrémité, dans le troisième collecteur (15c), un deuxième tube (17b) de la deuxième voie de circulation traversant, à l'une de ses extrémités axiales, la seconde coupelle intérieure (14b) et, à sa seconde extrémité axiale, la troisième coupelle intérieure (14c), de manière à déboucher, à sa première extrémité, dans le second collecteur (15b) et, à sa seconde extrémité, dans le troisième collecteur (15c), le troisième tube (17c) de la seconde voie de circulation des gaz d'échappement traversant, à l'une de ses extrémités, la seconde coupelle intérieure (14b) et, à sa seconde extrémité axiale, la troisième coupelle intérieure (14c) et la quatrième coupelle intérieure (14d), de manière à déboucher, à l'une de ses extrémités axiales, dans le second collecteur (15b) et, à sa seconde extrémité axiale, dans le quatrième collecteur (15d), le tube (16) constituant la première voie de circulation des gaz d'échappement traversant, à l'une de ses extrémités axiales, la première coupelle intérieure (14a) et la seconde coupelle intérieure (14b) et, à sa seconde extrémité axiale, la troisième coupelle intérieure (15c) et la quatrième coupelle intérieure (15d), de manière à déboucher par une première extrémité axiale dans le premier collecteur (15a) et par une seconde extrémité axiale dans le quatrième collecteur (15d).

4. Dispositif de refroidissement suivant la revendication 3, **caractérisé par le fait que** les ouvertures (3) dans la paroi latérale de l'enveloppe métallique (2) de l'échangeur de chaleur (1) sont situées entre la deuxième et la troisième coupelles intérieures (14b) la première et la seconde zone d'extrémité de l'enveloppe métallique (2) de l'échangeur de chaleur ne comportant aucune ouverture.

5. Dispositif de refroidissement suivant la revendication 2, **caractérisé par le fait que** les tubes (17a, 17b, 17c) de la seconde voie de circulation des gaz d'échappement comportent n tubes, n étant impair et n + 1 collecteurs (15a, 15b, 15c, 15d) délimités par deux coupelles d'extrémité axiale (18, 20) de l'enveloppe métallique (2) et n +1 coupelles internes (14a, 14b, 14c, 14d).

6. Dispositif de refroidissement suivant l'une quelconque des revendications 2 à 5, **caractérisé par le fait que** la section transversale de l'enveloppe métallique (2), les coupelles extérieures (18, 20) et les coupelles intérieures (14a, 14b, 14c, 14d) réalisées en tôle métallique plane présentent une forme oblongue, par exemple elliptique ou plus complexe pour permettre de loger le dispositif sous le plancher du véhicule automobile.

7. Dispositif de refroidissement suivant la revendication 6, **caractérisé par le fait que** les conduites (4) d'arrivée de gaz d'échappement et (6) d'évacuation des gaz d'échappement et les tubes (17a, 17b, 17c) de la seconde voie de circulation des gaz d'échappement présentent une section transversale circulaire ou oblongue, par exemple elliptique, les ouvertures traversant les coupelles extérieures (18, 20) et intérieures (14a, 14b, 14c, 14d) ayant une forme analogue pour l'engagement pratiquement sans jeu des conduits (4, 6) et des tubes (17a, 17b, 17c) dans les ouvertures.

8. Dispositif de refroidissement suivant l'une quelconque des revendications 1 à 7, **caractérisé par le fait que** le tube (16) constituant la première voie de circulation des gaz d'échappement dans le dispositif de refroidissement présente une section interne sensiblement inférieure à la section interne des tubes (17a, 17b, 17c) de la seconde voie de circulation et que la vanne commandée d'ouverture et de fermeture de l'une au moins des voies de circulation (16, 17) comporte un clapet destiné à assurer l'ouverture et la fermeture d'une extrémité d'un premier tube (17a) de la seconde voie de circulation destiné à recevoir les gaz d'échappement pénétrant dans l'enveloppe métallique (2) du dispositif de refroidissement, par l'intermédiaire de la conduite d'arrivée (4) et d'un moyen de distribution (15a) assurant également la distribution des gaz d'échappement dans le conduit (16) de la première voie de circulation.

9. Dispositif de refroidissement suivant l'une quelconque des revendications 1 à 8, **caractérisé par le fait qu'**il est disposé sur la ligne d'échappement (5) du véhicule automobile, en amont d'un système de dépollution, tel qu'un piège à NOx (10).

10. Dispositif suivant la revendication 1, **caractérisé par le fait que** l'enveloppe externe (2) de forme cylindrique est réalisée par emboutissage et notamment par emboutissage et assemblage de deux demi-coquilles.

11. Dispositif de refroidissement suivant l'une quelconque des revendications 1 à 10, **caractérisé par le fait qu'**au moins un soufflet est adjoint à l'un au moins des tubes (16, 17a, 17b, 17c) pour compenser des dilatations thermiques différentielles des tubes (16, 17a, 17b, 17c).

## Claims

1. Device for cooling exhaust gases from the engine (7) of a motor vehicle, inserted in the path of the exhaust gases in an exhaust system (5) of the vehicle, comprising a first circulation route of the gases in at least a first pipe (16), the outside wall of which is in contact with the cooling air, and a second circulation route (17) of the gases, which is longer than the length of the first circulation route and is formed by at least a second pipe (17a, 17b, 17c) having an outside wall in contact with the cooling air and having means (11, 12) for directing the exhaust gases fully towards the first circulation route or at least mainly towards the second circulation route, said directing means being controlled on the basis of a thermal parameter of operation of the exhaust system (5) of the engine (7), **characterised in that** it comprises an essentially cylindrical outer casing (2) with a side wall provided with openings (3), the first pipe (16) formed by a tube (16) extending in an axial direction of the cylindrical casing and the second circulation route (17) formed by a plurality of tubes (17a, 17b, 17c) fastened in essentially parallel arrangements by holding means (14a, 14b, 14c, 14d) in an axial direction to the interior of the cylindrical casing (2), an exhaust gas inlet pipe (4) in the cylindrical casing (2) connected to an upstream section (5') of the exhaust system (5); an exhaust gas discharge pipe (6) connected to a downstream section (5") of the exhaust system (5) and exhaust gas headers (15a, 15b, 15c, 15d) disposed inside the cylindrical casing (2) and separated by the holding means (14a, 14b, 14c, 14d) to allow the exhaust gases to pass from the inlet pipe (4) to the discharge pipe (6) via the first (16) and via the second (17) circulation routes, the directing means (11, 12) being formed by at least one valve (11) controlled for opening and closing the inlet end of at least one of the plurality of tubes (17,a, 17b, 17c).

2. Cooling device according to Claim 1, **characterised in that** the exhaust gas headers (15a, 15b, 15c, 15d) are defined inside the metal casing (2) of the cooling device (1) by two plates at the axial end or outer plates (18, 20), which are arranged transversely and close the axial ends of the metal casing (2) of the cooling device (1), and by holding means in the form of a plurality of inner plates (14a, 14b, 14c, 14d), each being arranged along the entire inside cross-section of the metal casing (2) in axial end zones of the metal casing (2) of the cooling device (1) and each having at least one opening for the fastening and passage of a tube (16, 17a, 17b, 17c) of the first and the second circulation routes of the gases, each of the tubes (16, 17a, 17b, 17c) of the first and second circulation routes (16, 17) of the exhaust gases being fastened in a first inner plate at one of its ends and in a second inner plate at its second end, each of the headers (15a, 15b, 15c, 15d) being defined inside the side wall of the metal casing (2) by a first plate, which can be an outer plate or an inner plate, and by a second plate, which is an inner plate, the exhaust gas inlet (4) and discharge (6) pipes discharging through a respective outer plate (18, 20).

3. Cooling device according to Claim 2, **characterised in that** the tubes (17a, 17b, 17c) of the second circulation route of the exhaust gases comprise three tubes (17a, 17b, 17c), and that the device comprises four headers (15a, 15b, 15c, 15d) defined inside the metal casing (2), a first header (15a) being defined between an outer plate (18) having the exhaust gas inlet pipe (4), which discharges into the first header (15a), and a first inner plate (14a) passing through it, a second header (15b) being defined between a first inner plate (14a) and a second inner plate (14b) disposed in a first end zone of the metal casing (2) on the side of the inlet pipe (4) of the exhaust gases, a third header (15c) being defined between a third inner plate (14c) and a fourth inner plate (14d) in a, second end zone of the metal casing (2) on the side of the discharge pipe (6) of the exhaust gases, and a fourth header (15d) being defined by the fourth inner plate (14d) and the second outer plate (30) with the exhaust gas discharge pipe (6) passing through it, a first tube (17a) of the second circulation route passing through the first inner plate (14a) and the second plate (14b) at one of its ends and through the third inner plate (14c) at its other end in order to discharge into the first header (15a) at one of its ends and into the third header (15c) at its second end, a second tube (17b) of the second circulation route passing through the second inner plate (14b) at one of its axial ends, and through the third inner plate (14c) at its second axial end in order to discharge into the second header (15b) at its first end and into the third header (15c) at its second end, the third tube (17c) of the second circulation route of the exhaust gases passing through the second inner plate (14b) at one of its ends and through the third inner plate (14c) and the fourth inner plate (14d) at its second axial end in order to discharge into the second header (15b) at one of its axial ends and into the fourth header (15d) at its second axial end, the tube (16) forming the first circulation route of the exhaust gases passing through the first inner plate (14a) and the second inner plate (14b) at one of its axial ends and through the third inner plate (15c) and the fourth inner plate (15d) at its second axial end in order to discharge into the first header (15a) through a first axial end and into the fourth header (15d) through a second axial end.

4. Cooling device according to Claim 3, **characterised in that** the openings (3) in the side wall of the metal casing (2) of the heat exchanger (1) are located between the second and the third inner plates (14b), wherein the first and second end zones of the metal casing (2) of the heat exchanger do not contain any opening.

5. Cooling device according to Claim 2, **characterised in that** the tubes (17a, 17b, 17c) of the second circulation route of the exhaust gases comprise n tubes, n being an odd number, and n+1 headers (15a, 15b, 15c, 15d) defined by two axial end outer plates (18, 20) of the metal casing (2) and n+1 inner plates (14a, 14b, 14c, 14d).

6. Cooling device according to any one of Claims 2 to 5, **characterised in that** the cross-section of the metal casing (2), the outer plates (18, 20) and the inner plates (14a, 14b, 14c, 14d) made from plane sheet metal have an oblong, e.g. elliptic, or more complex shape to enable the device to be housed below the floor of the motor vehicle.

7. Cooling device according to Claim 6, **characterised in that** the exhaust gas inlet (4) and discharge (6) pipes and the tubes (17a, 17b, 17c) of the second circulation route of the exhaust gases have a circular or oblong, e.g. elliptic, cross-section, the openings passing through the outer (18, 20) and inner (14a, 14b, 14c, 14d) plates having a similar shape for the pipes (4, 6) and the tubes (17a, 17b, 17c) to engage into the openings practically without play.

8. Cooling device according to any one of Claims 1 to 7, **characterised in that** the tube (16) forming the first circulation route of the exhaust gases in the cooling device has an inside section, which is essentially smaller than the inside section of the tubes (17a, 17b, 17c) of the second circulation route, and that the valve controlled for opening and closing at least one of the circulation routes (16, 17) comprises a flap in order to ensure opening and closure of one end of a first tube (17a) of the second circulation route intended to receive the exhaust gases entering the metal casing (2) of the cooling device via the inlet pipe (4) and via a distribution means (15a) also ensuring distribution of the exhaust gases in the pipe (16) of the first circulation route.

9. Cooling device according to any one of Claims 1 to 8, **characterised in that** it is disposed in the exhaust system (5) of the motor vehicle upstream of an emission control system such as an NOx trap (10).

10. Device according to Claim 1, **characterised in that** the cylindrical outer casing (2) is formed by drawing and in particular by drawing and assembling two half-shells.

11. Cooling device according to any one of Claims 1 to 10, **characterised in that** at least one bellows is attached to at least one of the tubes (16, 17a, 17b, 17c) to compensate the differential thermal expansions of the tubes (16, 17a, 17b, 17c).

## Patentansprüche

1. Vorrichtung zur Kühlung von Abgas eines Kraftfahrzeugmotors (7), die in der Abgasbahn in eine Abgasleitung (5) des Fahrzeugs eingefügt ist, mit einem ersten Zirkulationspfad für die Gase in einer ersten Leitung (16), die über ihre Außenwand mit Kühlluft in Kontakt steht, und einem zweiten Zirkulationspfad (17) für die Gase, der eine größere Länge als der erste Zirkulationspfad hat und gebildet wird durch wenigstens eine zweite Leitung (17a, 17b, 17c), die eine Außenwand hat, die mit der Kühlluft in Kontakt steht, und Mittel (11, 12) zur Verzweigung der Abgase in ihrer Gesamtheit oder wenigstens in der Hauptsache zu dem zweiten Zirkulationspfad, gesteuert in Abhängigkeit von einem thermischen Betriebsparameter der Abgasleitung (5) des Motors (7), **dadurch gekennzeichnet, daß** sie aufweist: eine äußere Hülle (2) mit im wesentlichen zylindrischer Form, die eine von Öffnungen (3) durchbrochene Seitenwand hat, wobei die erste Leitung (16) durch ein Rohr (16) gebildet wird, das sich in einer axialen Richtung der zylindrischen Hülle erstreckt, und der zweite Zirkulationspfad (17) durch mehrere Rohre (17a, 17b, 17c) gebildet wird, die mit Haltemitteln (14a, 14, 14c, 14d) in im wesentlichen paralleler Anordnung in einer axialen Richtung im Inneren der zylindrischen Hülle (2) befestigt sind, eine mit einem stromaufwärtigen Teil (5') der Abgasleitung (5) verbundene Einlaßleitung (4) zur Einleitung der Abgase in die zylindrische Hülle (2), eine mit einem stromabwärtigen Teil (5") der Abgasleitung (5) verbundene Auslaßleitung (6) für die Abgase, und Abgaskollektoren (15a, 15b, 15c, 15d), die im Inneren der zylindrischen Hülle (2) angeordnet und durch die Haltemittel (14a, 14b, 14c, 14d) getrennt sind, so daß sie die Abgase aus der Einlaßleitung (4) über die ersten und zweiten Zirkulationspfade (16, 17) zur Auslaßleitung (6) durchlassen, wobei die Verzweigungsmittel (11, 12) durch wenigstens ein gesteuertes Ventil (11) zum Öffnen und Schließen des Einlaßendes wenigstens eines der mehreren Rohre (17a, 17b, 17c) gebildet werden.

2. Vorrichtung nach Anspruch 1, **dadurch gekennzeichnet, daß** die Abgaskollektoren (15a, 15b, 15c, 15d) im Inneren der metallischen Hülle (2) der Kühlvorrichtung (1) begrenzt sind durch zwei Schalen an den axialen Enden oder äußere Schalen (18, 20), die quer angeordnet sind und die axialen Enden der metallischen Hülle (2) der Kühlvorrichtung (1) abschließen, und durch die Haltemittel in der Form mehrerer innerer Schalen (14a, 14b, 14c, 14d), die jeweils auf dem gesamten inneren Querschnitt der metallischen Hülle (2) in axialen Endzonen der metallischen Hülle (2) der Kühlvorrichtung (1) angeordnet sin, und die jeweils durchsetzt sind von wenigstens einer Öffnung für den Durchlaß und die Befestigung eines Rohres (16, 17a, 17b, 17c) der ersten und zweiten Zirkulationspfade, wobei jedes der Rohre (16, 17a, 17b, 17c) der ersten und zweiten Zirkulationspfade (16, 17) für die Abgase an einem seiner Enden in einer ersten inneren Schale und an seinem zweiten Ende in einer zweiten inneren Schale befestigt ist, jeder der Kollektoren (15a, 15b, 15c, 15d) innerhalb der Seitenwand der metallischen Hülle (2) begrenzt ist durch eine erste Schale, die eine äußere Schale oder eine innere Schale sein kann, und durch eine zweite Schale, die eine innere Schale ist; und die Einlaßleitung (4) und die Auslaßleitung (6) für die Abgase jeweils durch eine äußere Schale (18, 20) hindurch eintreten.

3. Vorrichtung nach Anspruch 2, **dadurch gekennzeichnet, daß** die Rohre (17a, 17b, 17c) des zweiten Zirkulationspfades für die Abgase drei Rohre (17a, 17b, 17c) umfassen und daß die Vorrichtung vier Kollektoren (15a, 15b, 15c, 15d) aufweist, die innerhalb der metallischen Hülle (2) begrenzt sind, wobei ein erster Kollektor (15a) zwischen einer äußeren Schale (18), die von der Einlaßleitung (4) durchsetzt ist, die in den ersten Kollektor (15a) mündet, und einer ersten inneren Schale (14a) begrenzt ist, ein zweiter Kollektor (15b) zwischen einer ersten inneren Schale (14a) und einer zweiten inneren Schale (14b) begrenzt ist, die in einer ersten Endzone der metallischen Hülle (2) auf der Seite der Einlaßleitung (4) angeordnet ist, ein dritter Kollektor (15c) zwischen einer dritten inneren Schale (14c) und einer vierten inneren Schale (14d) in einer zweiten Endzone der metallischen Hülle (2) auf der Seite der Auslaßleitung (6) begrenzt ist und ein vierter Kollektor (15d) durch die vierte innere Schale (14d) und die zweite äußere Schale (30) begrenzt ist, die von der Auslaßleitung (6) durchsetzt ist, ein erstes Rohr (17a) des zweiten Zirkulationspfades an einem seiner Enden die erste Schale (14a) und die zweite Schale (14b) und an seinem anderen Ende die dritte innere Schale (14c) durchdringt, so daß es mit einem seiner Enden in den ersten Kollektor (15a) und an seinem zweiten Ende in den dritten Kollektor (15c) mündet, ein zweites Rohr (17b) des zweiten Zirkulationspfades an einem seiner axialen Enden die zweite innere Schale (14b) und an seinem zweiten axialen Ende die dritte innere Schale (14c) durchdringt, so daß es an seinem ersten Ende in den zweiten Kollektor (15b) und an seinem zweiten Ende in den dritten Kollektor (15c) mündet, das dritte Rohr (17c) des zweiten Zirkulationspfades an einem seiner Enden die zweite innere Schale (14b) und an seinem zweiten axialen Ende die dritte innere Schale (14c) und die vierte innere Schale (14d) durchdringt, so daß es an einem seiner axialen Enden in den zweiten Kollektor (15b) und an seinem zweiten axialen Ende in den vierten Kollektor (15d) mündet, das Rohr (16), das den ersten Zirkulationspfad für die Abgase bildet, an einem seiner axialen Enden die erste innere Schale (14a) und die zweite innere Schale (14b) und an seinem zweiten axialen Ende die dritte innere Schale (15c) und die vierte innere Schale (15d) durchdringt, so daß es mit einem ersten axialen Ende in den ersten Kollektor ( 15a) und mit einem zweiten axialen Ende in den vierten Kollektor (15d) mündet.

4. Vorrichtung nach Anspruch 3, **dadurch gekennzeichnet, daß** die Öffnungen (3) in der Seitenwand der metallischen Hülle (2) des Wärmetauschers (1) zwischen der zweiten und der dritten inneren Schale (14b) liegen, während die erste und die zweite Endzone der metallischen Hülle (2) des Wärmetauschers keine Öffnung aufweisen.

5. Vorrichtung nach Anspruch 2, **dadurch gekennzeichnet, daß** die Rohre (17a, 17b, 17c) des zweiten Zirkulationspfades für die Abgase n Rohre umfassen, wobei n ungerade ist, sowie ein n+1 Kollektoren (15a, 15b, 15c, 15d), die durch zwei Schalen (18, 20) an den axialen Enden der metallischen Hülle (2) und n+1 innere Schalen (14a, 14b, 14c, 14d) begrenzt sind.

6. Vorrichtung nach einem der Ansprüche 2 bis 5, **dadurch gekennzeichnet, daß** der Querschnitt der metallischen Hülle (2), die äußeren Schalen (18, 20) und die inneren Schalen (14a, 14b, 14c, 14d), die aus flachem Metallblech gebildet sind, eine längliche Form haben, beispielsweise elliptisch oder komplexer, um die Unterbringung der Vorrichtung unter dem Bodenblech des Kraftfahrzeugs zu ermöglichen.

7. Vorrichtung nach Anspruch 6, **dadurch gekennzeichnet, daß** die Einlaßleitung (4), die Auslaßleitung (6) und die Rohre (17a, 17b, 17c) des zweiten Zirkulationspfades für die Abgase einen kreisförmigen oder länglichen, beispielsweise elliptischen Querschnitt haben, und die Öffnungen in den äußeren Schalen (18, 20) und den inneren Schalen (14a, 14b, 14c, 14d) eine analoge Form haben, für den praktisch spielfreien Eingriff dieser Leitungen (4, 6) und Rohre (17a, 17b, 17c) in die Öffnungen.

8. Vorrichtung nach einem der Ansprüche 1 bis 7, **dadurch gekennzeichnet, daß** das Rohr (16), das den ersten Zirkulationspfad für die Abgase in der Kühlvorrichtung bildet, einen Innenquerschnitt hat, der wesentlich kleiner ist als der Innenquerschnitt der Rohre (16'7a, 17b, 17c) des zweiten Zirkulationspfades, und daß das gesteuerte Ventil zum Öffnen und Schließen wenigstens eines der Zirkulationspfade (16, 17) eine Klappe aufweist, die dazu bestimmt ist, das Öffnen und Schließen eines Endes eines ersten Rohres (17a) des zweiten Zirkulationspfades sicherzustellen, das dazu bestimmt ist, die Abgase aufzunehmen, die über die Einlaßleitung (4) in die metallische Hülle (2) der Kühlvorrichtung eintreten, sowie ein Verteilermittel (15a), das zugleich die Verteilung der Abgase in die Leitung (16) des ersten Zirkulationspfades sicherstellt.

9. Vorrichtung nach einem der Ansprüche 1 bis 8, **dadurch gekennzeichnet, daß** sie in der Abgasleitung (5) des Kraftfahrzeugs stromaufwärts eines Abgasreinigungssystems wie etwa einer NOx-Falle (10) angeordnet ist.

10. Vorrichtung nach Anspruch 1, **dadurch gekennzeichnet, daß** die äußere Hülle (2) von zylindrischer Form durch Tiefen und insbesondere durch Tiefen und Zusammenbau von zwei Halbschalen hergestellt ist.

11. Vorrichtung nach einem der Ansprüche 1 bis 10, **dadurch gekennzeichnet, daß** sich an zumindest eines der Rohre (16, 17a, 17b, 17c) mindestens ein Balg anschließt, um unterschiedliche Wärmeausdehnungen der Rohre (16, 17a, 17b, 17c) auszugleichen.
